# EUROPÄISCHE PATENTANMELDUNG

(11) **EP 4 647 622 A1**
(43) Veröffentlichungstag der Anmeldung: **12.11.2025**
(21) Anmeldenummer: 24175131.2
(22) Anmeldetag: 10.05.2024
(51) Int. Cl.: F16C 13/00, B60P 1/52, B65G 1/02, B65G 13/00, B65G 13/11, B65G 13/12, B65G 39/00, B65G 39/10, F16C 29/04, F16C 29/12, F16C 29/00

(54) **SCHIENENLAUFWAGEN**

(71) Anmelder: RK Rose + Krieger GmbH Verbindungs- und Positioniersysteme, 32423 Minden (DE)
(72) Erfinder: SCHEIBE, Jörg, 31655 Stadthagen (DE); LAMPERT, Rolf, 32584 Löhne (DE); MÖLLER, Ingo, 31746 Auetal (DE); RONIG, Torsten, 31737 Rinteln (DE); KUHN, Lars, 32469 Petershagen (DE); MEIER, Jürgen, 31606 Warmsen (DE); DETERING, Jan, 32052 Herford (DE)
(74) Vertreter: Kleine, Hubertus

(57) **Zusammenfassung**

Die Erfindung betrifft einen Schienenlaufwagen, aufweisend ein Fahrwerk (20) mit einer Mehrzahl von Laufrollen (26), die in einer Ebene angeordnet sind, jeweils eine Drehachse aufweisen, die senkrecht zu dieser Ebene steht, und entlang ihres Umfangs mit einem Profil zum Abrollen auf einem korrespondierenden Profil einer Lauffläche einer Schiene (10) versehen sind. Der Schienenlaufwagen zeichnet sich dadurch aus, dass das Fahrwerk (20) zwei Drehgestelle (23) aufweist, wobei an jedem Drehgestell (23) mindestens zwei der Laufrollen (26) gegenüberliegend zur Anlage an jeweils einer Seite der Schiene (10) gelagert sind.

## Beschreibung

Die Erfindung betrifft einen Schienenlaufwagen, der ein Fahrwerk mit einer Mehrzahl von Laufrollen aufweist, wobei die Laufrollen in einer Ebene angeordnet sind, jeweils eine Drehachse aufweisen, die senkrecht zu dieser Ebene steht, und entlang ihres Umfangs mit einem Profil versehen sind, um auf einem korrespondierenden Profil einer Lauffläche einer Schiene abzurollen.

Derartige Schienenlaufwagen werden beispielsweise für Materialtransportsysteme in Produktionsstraßen und/oder einem Materiallager eingesetzt. Die Schiene kann dabei beispielsweise zwei parallel zueinander und beabstandet voneinander angeordnete Rundstäbe aufweisen, die konvexe Laufflächen bereitstellen. Die beiden Rundstäbe sind horizontal nebeneinander angeordnet. Auf den Schienenlaufwagen, die beispielsweise dem Materialtransport dienen, sind die Laufrollen dann mit vertikalen Achsen in einer Ebene montiert und umgreifen zum Beispiel paarweise jeweils die Schiene mit den parallel verlaufenden Rundstäben.

In der Druckschrift DE 90 16 625 U1 ist ein derartiger Schienenlaufwagen beschrieben, wobei die Schiene gerade und gekrümmte Schienenabschnitte aufweisen kann. Die Laufwagen sind jeweils mit vier Laufrollen versehen, die bevorzugt in den Ecken eines Trapezes angeordnet sind. Zumindest ein Teil der Laufrollen ist mit elastischen nachgiebigen Elementen versehen, um einen sich verändernden Abstand gegenüberliegender Laufrollen bei Fahrten an einem geraden Schienenabschnitt gegenüber Fahrten gegenüber einem gekrümmten Schienenabschnitt ausgleichen zu können.

Eine vergleichbare Anordnung ist auch aus der Druckschrift EP 3 995 713 A1 bekannt. Die in dieser Schrift gezeigten Laufwagen weisen auf einer Seite der Schiene zwei und auf der anderen Seite der Schiene entweder eine oder zwei Laufrollen auf, wobei eine oder mehrere der Laufrollen an federkraftbeaufschlagten Schwenkarmen angeordnet ist bzw. sind, um einen sich ändernden Abstand der Laufrollen voneinander bei geraden beziehungsweise gekrümmten Schienensegmenten ausgleichen zu können.

Die Problematik der sich ändernden Laufrollenabstände nimmt mit zunehmendem Abstand der Laufrollen in Längsrichtung der Schiene und damit mit zunehmender Größe der Wagen zu. Zudem führen elastische Elemente in der Laufrollenlagerung zu einer erhöhten Instabilität.

Es ist eine Aufgabe der vorliegenden Erfindung, auch größere Schienenlaufwagen für ein derartiges Transportsystem bereitzustellen, bei dem auf zusätzliche Elemente zur elastischen Lagerung der Laufrollen verzichtet werden kann und dennoch auch für größere Belastungen eine stabile Führung des Laufwagens erreicht wird.

Diese Aufgabe wird durch einen Schienenlaufwagen mit den Merkmalen des unabhängigen Anspruchs gelöst. Vorteilhafte Ausgestaltungen und Weiterbildungen sind Gegenstand der abhängigen Ansprüche.

Ein erfindungsgemäßer Schienenlaufwagen der eingangs genannten Art zeichnet sich dadurch aus, dass das Fahrwerk zwei Drehgestelle aufweist, wobei an jedem Drehgestell mindestens zwei der Laufrollen gegenüberliegend zur Anlage an jeweils einer Seite der Schiene gelagert sind. Die Drehgestelle sind drehbar z.B. gegenüber einer Grundplatte oder einem Grundrahmen des Fahrgestells gelagert. Bei Kurvenfahrten verdrehen sich die Drehgestelle gegenüber der Grundplatte oder dem Grundrahmen, wodurch der Abstand der paarweise an der Schiene angeordneten Laufrollen zueinander, nachfolgend auch Querabstand genannt, sich nicht oder nur unwesentlich bei Kurvenfahrten gegenüber Geradeausfahrten vergrößert. Es kann dadurch auf elastische Elemente in der Lagerung der Laufrollen verzichtet werden, was eine stabilere Führung des Schienenlaufwagens an der Schiene zur Folge hat.

Durch die Verwendung von zwei Drehgestellen wird dennoch ein großer Abstand der in Fahrtrichtung vorderen und hinteren Laufrollen des Fahrwerk erzielt. Dadurch kann ein hohes Kippmoment vom Fahrwerk aufgenommen werden, beispielsweise bei einem Beschleunigen oder Abbremsen.

Bei einer vorteilhaften Ausgestaltung des Schienenlaufwagens sind an mindestens einem der Drehgestelle, bevorzugt an beiden Drehgestellen, je vier der Laufrollen angeordnet. Dadurch werden unerwünschte Drehschwingungen des Drehgestells verhindert. Das Drehgestell richtet sich vorteilhaft stabil auch bei Kurvenfahrt und bei Übergängen von einer Geradeausfahrt zu einer Kurvenfahrt aus. Bevorzugt sind die vier Laufrollen des Drehgestells jeweils paarweise gegenüberliegend angeordnet. Dabei ist weiter bevorzugt ein Längsabstand der Drehachsen der Paare der Laufrollen nur geringfügig größer ist als ein Durchmesser der Laufrollen. Die Laufrollen liegen also in der Schienenlängsrichtung möglichst eng beieinander, wodurch die Erhöhung des Querabstands bei Kurvenfahrten gegenüber Geradeausfahrten möglichst klein gehalten wird.

Bei einer weiteren vorteilhaften Ausgestaltung des Schienenlaufwagens sind die Drehgestelle an einer Grundplatte des Fahrgestells drehbar montiert, bevorzugt mithilfe jeweils eines Drehkranzes. Die Drehachse jedes Drehgestells steht dabei senkrecht zu der Grundplatte, die wiederum parallel zu der Ebene ausgerichtet ist, in der die Mehrzahl der Laufrollen angeordnet ist.

Bei einer weiteren vorteilhaften Ausgestaltung des Schienenlaufwagens weisen die Drehgestelle jeweils einen c-förmigen Träger mit einer Basis und zwei Schenkeln auf, wobei die Laufrollen an den Schenkeln des c-förmigen Trägers angeordnet sind. Bevorzug sind die Laufrollen verschiebbar an den Schenkeln des c-förmigen Trägers angeordnet, so dass ihr Abstand zur Schiene einstellbar ist. Die Laufrollen können so mit einer Vorspannung, die sich aus einer elastischen Verformung des c-förmigen Trägers ergibt, an die Schiene angedrückt werden. Eine Abstandsänderung des Querabstands der paarweise an der Schiene anliegenden Laufrollen führt dann zu einer Erhöhung der Vorspannung der Laufrollen auf die Schiene, die vorteilhaft der wirkenden Zentripetalkraft bei der Kurvenfahrt entgegenwirkt.

Die Erfindung wird nachfolgend anhand eines Ausführungsbeispiels mithilfe von Figuren näher erläutert. Die Figuren zeigen:
- Figur 1: eine räumliche Darstellung eines Fahrwerks eines Schienenlaufwagens auf einem geraden Schienenabschnitt;
- Figur 2: eine geschnittene Draufsicht auf die Anordnung gemäß Figur 1 ;
- Figur 3: eine räumliche Darstellung des Fahrwerks der Figuren 1 und 2 auf einer Schiene mit einem Kurvenabschnitt;
- Figur 4: eine geschnittene Draufsicht auf die Anordnung gemäß Figur 3;
- Figur 5: eine räumliche Explosionsdarstellung des Fahrwerks der vorhergehenden Figuren; und
- Figur 6: eine räumliche Gesamtansicht eines Schienenlaufwagens.

In allen Figuren kennzeichnen gleiche Bezugszeichen gleiche bzw. gleichwirkende Elemente. Aus Gründen der Übersichtlichkeit sind nicht in allen Figuren alle Elemente mit Bezugszeichen versehen.

Richtungsangaben wie "rechts" oder "links" beziehen sich auf die Darstellungen der Figuren. Lediglich die Richtungsangaben "oben" und "unten" beziehen sich auf eine natürliche Ausrichtung des Schienenlaufwagens, des Fahrwerks bzw. der Schienen im Betrieb.

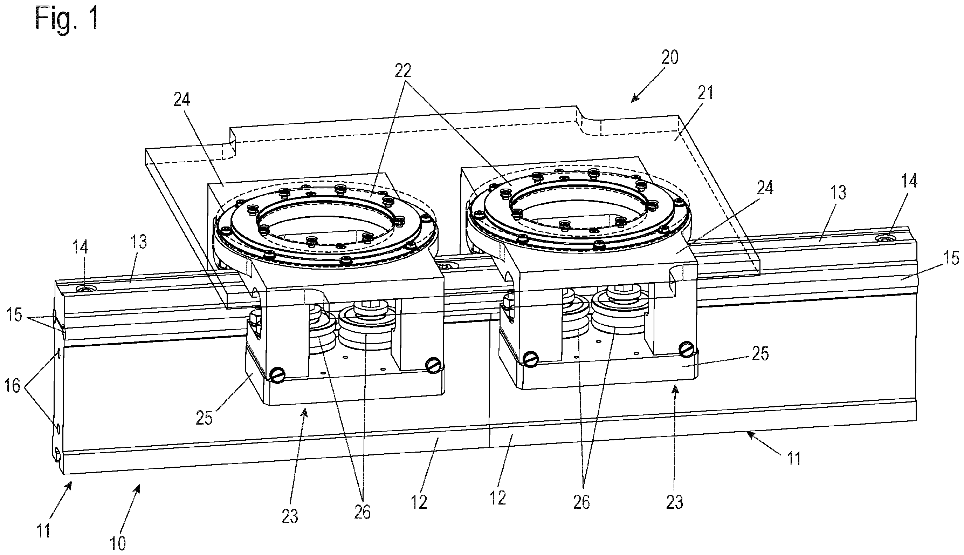

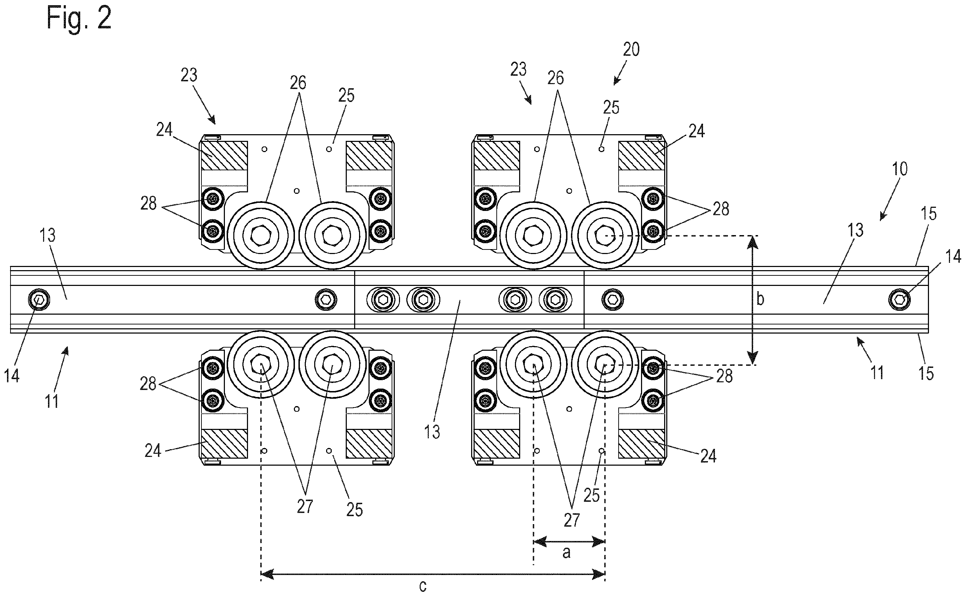

Die Figuren 1 und 2 zeigen zunächst ein Fahrwerk 20 auf einem geraden Schienenabschnitt 11 einer Schiene 10. Die Figur 1 zeigt die Anordnung in einer räumlichen Darstellung. Figur 2 zeigt die gleiche Anordnung in einer geschnittenen Draufsicht.

Die Schiene 10 weist im Querschnitt an jeder Stelle ein Tragprofil 12 auf, auf das ein Kopfprofil 13 aufgeschraubt ist. Die Verschraubung erfolgt mittels Schrauben 14, die von oben durch das Kopfprofil 13 führen und in Gewindebohrungen in das Tragprofil 12 eingeschraubt sind. Die Schrauben 14 sind mit ihren Köpfen in dem Kopfprofil 13 versenkt, sodass sie nicht störend nach oben überstehen.

Zwischen dem Tragprofil 12 und dem Kopfprofil 13 sind zwei Rundstäbe 15 eingespannt, die nach außen hin überstehen und Laufflächen für das Fahrwerk bereitstellen. Die Rundstäbe 15 sind durch entsprechende Profilierung des Tragprofils 12 bzw. des Kopfprofils 13 in der dargestellten parallelen und voneinander beabstandeten Anordnung gehalten werden. Der Abstand der Rundstäbe 15 ist dabei bis auf unvermeidbare Toleranzen gleichbleibend über die gesamte Schiene 10.

Die in den Figuren 1 und 2 gezeigte Schiene 10 ist aus zwei Abschnitten des Tragprofiles 12 und drei Abschnitten des Kopfprofils 13 zusammengesetzt. Die Rundstäbe erstrecken sich in dem Beispiel über die gesamte dargestellte Schiene 10. Übergänge zwischen den aneinander angrenzenden Tragprofilen 12 einerseits und den aneinander angrenzenden Kopfprofilen 13 andererseits sind bevorzugt in Längsrichtung der Schiene 10 versetzt zueinander positioniert. Beim Vergleich der Figuren 1 und 2 ist zu erkennen, dass im Bereich des Übergangs der beiden Tragprofile 12, also genau in der Mitte der dargestellten Schiene 10, ein diesen Übergang überdeckendes Kopfprofil 13 aufgesetzt ist. Dieses ist mit Langlöchern versehen, sodass die beiden Tragprofile 12 bündig aneinandergeschoben werden können und in der aneinandergeschoben Position durch das den Übergang überdeckende mittlere Kopfprofil 13 miteinander verbunden werden. In dem Tragprofil 12 sind zudem stirnseitig Bohrungen 16 zum Einstecken von hier nicht dargestellten Verbindungselementen, insbesondere Führungs- und Spannbolzen, vorhanden.

Ein solches Prinzip der versetzten Übergänge ist bevorzugt auch im Hinblick auf Übergänge zwischen sich in Längsrichtung aneinander anschließenden Rundstäben 15 umgesetzt. Anders als hier schematisch dargestellt, enden die Rundstäbe 15 vorteilhaft nicht am Ende eines Tragprofils 12, sondern ragen über das Tragprofil 12 hinaus, sodass Übergänge zwischen zwei Rundstäben 15 sich nicht an einer Übergangsstelle zweier Tragprofile 12 befinden.

Auf die Schiene 10 ist ein Fahrwerk 20 aufgesetzt, das mit einer Mehrzahl von Laufrollen 26 entlang der Schiene 10 geführt ist. Die Laufrollen 26 sind umfangsseitig mit konkaven Laufflächen versehen, die in ihre Radien an den Radius der Rundstäbe 15 angepasst sind, und mit denen sie auf den nach außen hervorstehenden Abschnitten der Rundstäbe 15 abrollen. Die Laufrollen 26 legen dadurch das Fahrwerk 20 auch in vertikaler Richtung an der Schiene 10 fest.

Das Fahrwerk 20 weist an der Unterseite einer hier transparent dargestellten Grundplatte 21 zwei Drehkränze 22 auf, an denen jeweils ein Drehgestell 23 drehbar zur Grundplatte 21 montiert ist. Jedes Drehgestell 23 trägt vier der genannten Laufrollen 26, sodass ein Fahrgestell 20 mit insgesamt acht Laufrollen 26 ausgestattet ist. Die vier Laufrollen 26 jedes Drehgestells 23 sind paarweise gegenüber angeordnet, ihre Drehachsen liegen in einem Querabstand b (vgl. Figur 1) auf einer Geraden, die senkrecht zur Längsrichtung der Schiene 10 ausgerichtet ist.

In Längsrichtung der Schiene 10 sind die beiden Paare der Laufrollen 26 eines Drehgestell 23 mit einem Längsabstand a (vgl. Figur 1) ihrer Drehachsen voneinander angeordnet. Der Längsabstand a ist so gewählt, dass eine Spalt zwischen den hintereinander angeordneten Laufrollen 26 nur im Bereich von Millimetern liegt. Mit anderen Worten ist der Längsabstand a nur geringfügig größer als ein Durchmesser der Laufrollen 26.

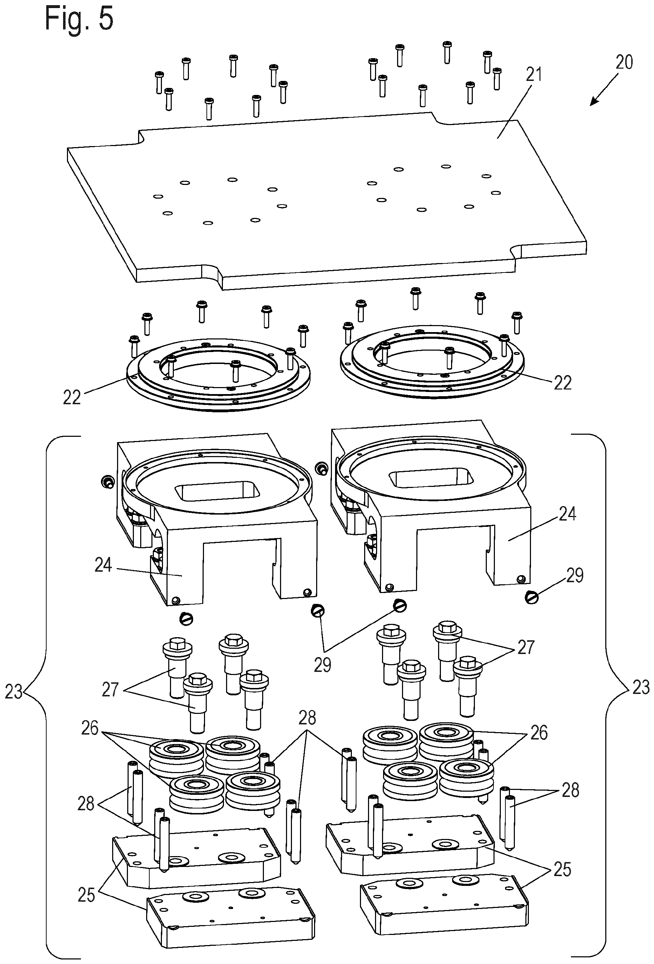

Der Aufbau des Fahrwerks 20 ist in der Figur 5 detaillierter in einer räumlichen Explosionsdarstellung wiedergegeben. Die Darstellung zeigt, dass bei dem gezeigten Ausführungsbeispiel jedes Drehgestell 13 einen einstückig hergestellten c-förmigen Träger 24 mit einer Basis und zwei Schenkeln aufweist. An der Basis ist eine Aufnahme für den Drehkranz 22 ausgebildet. Die Schenkel des c-förmige Trägers 24 umgreifen im Betrieb die Schiene 10.

An jedem Schenkel des c-förmigen Trägers 24 ist eine Lagerplatte 25 angeschraubt, an der jeweils zwei der Laufrollen 26 gelagert sind. Die Laufrollen 26 weisen dabei integrierte Wälzlager, beispielsweise Kugellager, auf und werden jeweils mit einer einschraubbaren Lagerachse 27 auf der entsprechenden Lagerplatte 25 montiert.

Die Befestigung der Lagerplatten 25 an dem Träger 24 erfolgt vorliegend mit jeweils vier Befestigungsschrauben 28. Die Befestigungsschrauben 28 sind als Stiftschrauben ausgebildet und einerseits in Gewindebohrungen der Lagerplatte 25 eingeschraubt und andererseits mithilfe von Muttern an den Schenkeln des c-förmigen Trägers 24 festgeschraubt. Dabei sind Bohrungen in den Schenkeln des Trägers 24 als Langlöcher ausgebildet, sodass die Lagerplatte 25 an dem Träger 24 quer zur Längsrichtung der Schiene 10 verschoben werden kann. Auf diese Weise kann der Querabstand b der Laufrollen 26 eingestellt werden, um einen spielfreien Lauf der Laufrollen 26 an den Rundstäben 15 zu gewährleisten. Um die Einstellung zu erleichtern und auch eine Vorspannung aufbringen zu können, sind Einstellschrauben 29 vorgesehen, mit denen die Lagerplatten 25 in Richtung der Schiene 10 gedrückt werden können, bevor sie dann mithilfe der Befestigungsschrauben 28 befestigt werden. Eine Vorspannungskraft wird von der Elastizität des Trägers 24 selbst bereitgestellt.

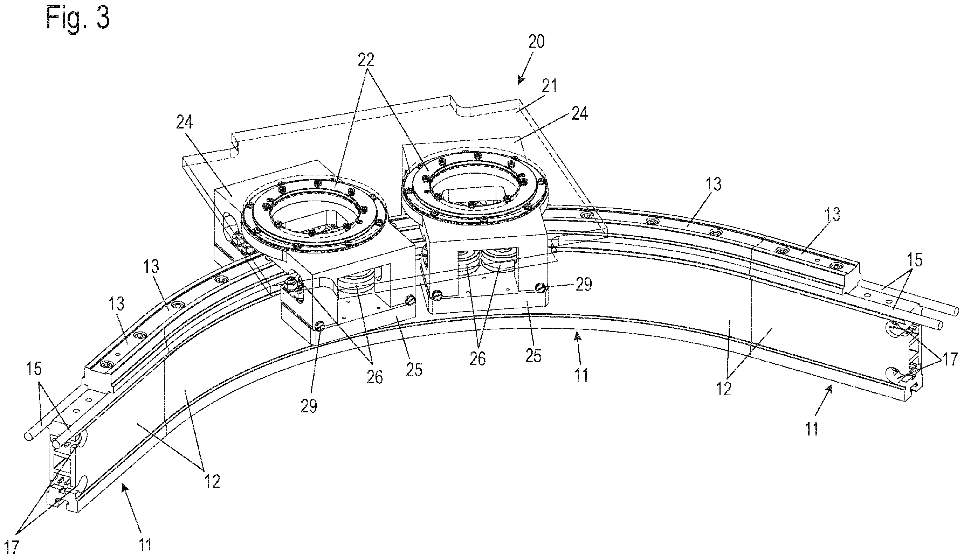

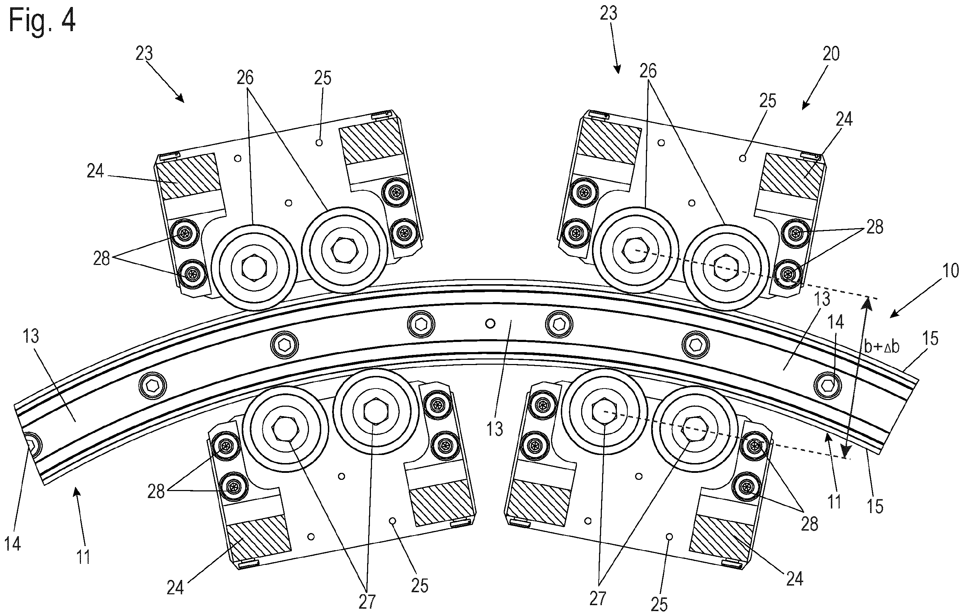

Die Figuren 3 und 4 zeigen in vergleichbarer Darstellungsart wie die Figuren 1 und 2 das Fahrwerk 20 auf einer Schiene 10, die zwischen zwei geraden Schienenabschnitten 11 einen gekrümmten Schienenabschnitt 11 umfasst.

Auch bei Bewegung entlang des gekrümmten Schienenabschnitts 11 steht jedes Drehgestell 23 mit seiner Mittelquerlinie senkrecht zur Schiene 10. Als Folge sind die Drehgestelle 23 nicht mehr parallel zueinander und auch nicht parallel einer Mittelquerlinie der Grundplatte 21 ausgerichtet. Diese Verdrehung der Drehgestelle 23 gegenüber der Grundplatte 21 wird durch die Drehkränze 22 ermöglicht.

Der Querabstand b der sich an der Schiene 10 paarweise gegenüberliegenden Laufrollen 26 vergrößert sich bei der Kurvenfahrt um einen Betrag, der vom Radius der Kurve und von dem Längsabstand a der Laufrollen 26 eines Drehgestells 23 in Schienenrichtung abhängt. Da der Längsabstand a von hintereinander angeordneten Laufrollen 26 innerhalb eines Drehgestells 23 konstruktiv verglichen mit der Länge der Grundplatte 21 klein ist, vergrößert sich der Querabstand b bei der Kurvenfahrt verglichen mit der Geradeausfahrt nur geringfügig.

Bei der dargestellten Geometrie beträgt beispielsweise die Abstandsänderung Δb des Querabstands b nur etwa 1/1000 des Querabstands b bei Geradeausfahrt. Diese Abstandsänderung Δb kann von der Elastizität des Trägers 24 aufgenommen werden, es wird also keine separate elastische Lagerung für die Laufrollen 26 bei der Kurvenfahrt benötigt. Die Abstandsänderung Δb führt zudem zu einer leichten Erhöhung der Vorspannung der Laufrollen 26 auf die Schiene 10, die vorteilhaft einer Zentripetalkraft bei der Kurvenfahrt entgegenwirkt.

Durch die Verwendung von zwei Drehgestellen 23 wird dennoch ein großer Abstand c (vgl. Figur 1) der in Fahrtrichtung vorderen und hinteren Laufrollen 26 des Fahrwerk 20 erzielt. Dadurch kann ein hohes Kippmoment vom Fahrwerk 20 aufgenommen werden, beispielsweise beim Beschleunigen oder Abbremsen, wenn ein Masseschwerpunkt eines auf dem Fahrwerk 20 aufgebauten Wagens oberhalb der Rundstäbe 15 liegt.

Dadurch, dass jedes Drehgestellt 23 mit zwei Paaren von gegenüberliegenden Laufrollen 26 ausgestattet ist, werden unerwünschte Drehschwingungen des Drehgestells 23 verhindert. Das Drehgestell 23 richtet sich stabil auch bei Kurvenfahrt und bei Übergängen von einer Geradeausfahrt zu einer Kurvenfahrt aus.

In der Figur 3 ist an den Rändern der dargestellten Schiene 10 der bereits erwähnte vorteilhafte Überstand der Rundstäbe 15 gezeigt, so dass bei Verbindung des dargestellten Schienenelements mit einem sich anschließenden Schienenelement ein möglichst nahtloser und versatzfreier Übergang zwischen sich in Längsrichtung aneinander anschließenden Rundstäben 15 gegeben ist. In der Figur 3 sind weiter Querbohrungen 17 am stirnseitigen Rand der geraden Schienenstücke 11 zu erkennen. In diese Querbohrungen 17 können Exzenterspannelemente eingesetzt werden, die Verbindungsstifte greifen, die an den anzusetzenden Schienenstücken in den stirnseitigen Bohrungen 16 (vgl. Figur 1) zu erkennen.

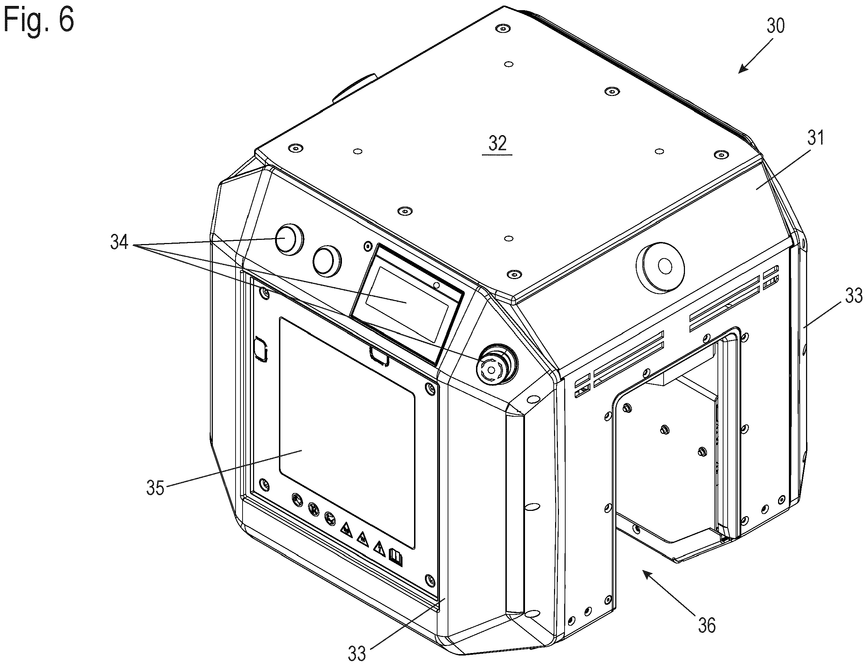

Figur 6 zeigt schließlich beispielhaft einen möglichen Aufbau 30, der von einem derartigen Fahrwerk 20 getragen werden kann. Der Aufbau 30 ist ebenfalls u-förmig aufgebaut und umgreift die Schiene 10 sattelartig. Er weist eine Basis 31 auf, auf der sich eine im Betrieb waagerechte Montageplatte 32 befindet. Die Die Montageplatte 32 ist parallel zu der Grundplatte 21 des hier nicht sichtbaren Fahrwerks 20 ausgerichtet.

Auf der Montageplatte 32 kann im Betrieb eine Nutzlast des Wagens transportiert werden, wobei auf der Montageplatte 32 entsprechende Aufnahmeelemente für die Nutzlast montiert sein können.

Seitlich an die Basis 31 schließen sich Seitenwangen 33 an, die das Fahrwerk 20 abdecken und in denen für den Betrieb notwendige Steuerungen, Antriebe und/oder Energiespeicher zur Energieversorgung, beispielsweise wiederaufladbare Batterien und/oder Kondensatoren, angeordnet sein können. Ein Antrieb des Wagens kann beispielsweise über elektromotorisch angetriebene Reibräder des Wagens erfolgen, die auf Seitenflächen der Tragprofile 12 der Schiene 10 abrollen, wobei bevorzugt mindestens zwei sich gegenüberliegende Reibräder verwendet werden. Bei dem dargestellten Ausführungsbeispiel sind im Übergangsbereich zwischen der Basis 31 und den Seitenwannen 33 Bedienelemente 34 positioniert. Diese umfassen beispielsweise Bedienknöpfe, ein Anzeigeelement, z.B. ein Display zur Statusanzeige, sowie einen Notausknopf.

In einer der Seitenwangen 33 ist beim gezeigten Beispiel zudem eine Ladeeinrichtung 35 angeordnet, vorliegend eine induktive Ladeeinrichtung, die ein Wiederaufladen eines integrierten Energiespeichers in zugeordneten Ladestationen der Anordnung erlaubt. Zwischen den Seitenwangen 33 befindet sich ein Tunnel 36, durch den die Schiene 10 verläuft und in dem das hier nicht sichtbare Fahrwerk 20 angeordnet ist.

### Bezugszeichen

- 10: Schiene
- 11: Schienenabschnitt
- 12: Tragprofil
- 13: Kopfprofil
- 14: Verschraubung
- 15: Rundstab
- 16: stirnseitige Bohrung
- 17: Querbohrung

- 20: Fahrwerk
- 21: Grundplatte
- 22: Drehkranz
- 23: Drehgestell
- 24: Träger
- 25: Lagerplatte
- 26: Laufrolle
- 27: Lagerachse
- 28: Befestigungsschraube
- 29: Einstellschraube

- 30: Aufbau
- 31: Basis
- 32: Montageplatte
- 33: Seitenwanne
- 34: Bedienelement
- 35: Ladeeinrichtung
- 36: Tunnel

## Patentansprüche

1. Schienenlaufwagen, aufweisend ein Fahrwerk (20) mit einer Mehrzahl von Laufrollen (26), die in einer Ebene angeordnet sind, jeweils eine Drehachse aufweisen, die senkrecht zu dieser Ebene steht, und entlang ihres Umfangs mit einem Profil zum Abrollen auf einem korrespondierenden Profil einer Lauffläche einer Schiene (10) versehen sind, **dadurch gekennzeichnet, dass** das Fahrwerk (20) zwei Drehgestelle (23) aufweist, wobei an jedem Drehgestell (23) mindestens zwei der Laufrollen (26) gegenüberliegend zur Anlage an jeweils einer Seite der Schiene (10) gelagert sind.

2. Schienenlaufwagen nach Anspruch 1, bei dem an mindestens einem der Drehgestelle (23) vier der Laufrollen (26) angeordnet sind.

3. Schienenlaufwagen nach Anspruch 2, bei dem die vier Laufrollen (26) des Drehgestells (23) jeweils paarweise gegenüberliegend gelagert sind.

4. Schienenlaufwagen nach Anspruch 3, bei dem ein Längsabstand der Drehachsen der Paare der Laufrollen (26) nur geringfügig größer ist als ein Durchmesser der Laufrollen (26).

5. Schienenlaufwagen nach einem der Ansprüche 1 bis 4, bei dem die Drehgestelle (23) an einer Grundplatte (21) des Fahrgestells (20) drehbar montiert sind.

6. Schienenlaufwagen nach Anspruch 5, bei dem die Drehgestelle (23) mithilfe von jeweils einem Drehkranz (22) an der Grundplatte (21) des Fahrgestells (20) drehbar montiert sind.

7. Schienenlaufwagen nach Anspruch 5 oder 6, bei dem eine Drehachse jedes Drehgestells (23) senkrecht zu der Grundplatte (21) steht.

8. Schienenlaufwagen nach einem der Ansprüche 5 bis 7, bei dem die Grundplatte (21) parallel zu der Ebene ausgerichtet ist, in der die Mehrzahl der Laufrollen (26) angeordnet ist.

9. Schienenlaufwagen nach einem der Ansprüche 1 bis 8, bei dem die Drehgestelle (23) jeweils einen c-förmigen Träger (24) mit einer Basis und zwei Schenkeln aufweisen, wobei die Laufrollen (26) an den Schenkeln des c-förmigen Trägers (24) angeordnet sind.

10. Schienenlaufwagen nach Anspruch 9, bei dem die Laufrollen (26) an den Schenkeln des c-förmigen Trägers (24) verschiebbar angeordnet sind, so dass ihr Abstand zur Schiene (10) einstellbar ist.

11. Schienenlaufwagen nach Anspruch 10, bei dem die Laufrollen (26) mit einer Vorspannung, die sich aus einer elastischen Verformung des c-förmigen Trägers (24) ergibt, an der Schiene (10) anliegen können.
